# DEMANDE DE BREVET EUROPEEN

(11) **EP 4 704 162 A1**
(43) Date de publication de la demande: **04.03.2026**
(21) Numéro de dépôt: 25198650.1
(22) Date de dépôt: 28.08.2025
(51) Int. Cl.: H01M 4/04, H01M 4/131, H01M 10/04, H01M 10/0525, H01M 10/0562, H01M 10/0585, H01M 10/052

(54) **DISPOSITIF DE STOCKAGE ET PROCÉDÉ DE FABRICATION**

(30) Priorité: 02.09.2024 FR 2409338
(71) Demandeur: Commissariat à l'Energie Atomique et aux Energies Alternatives, 75015 Paris (FR)
(72) Inventeur: CELE, Jacopo, 38054 Grenoble cedex 09 (FR); COLONNA, Jean-Philippe, 38054 Grenoble cedex 09 (FR); JACQUIN, Elisabeth, 38054 Grenoble cedex 09 (FR)
(74) Mandataire: Hautier IP

(57) **Abrégé**

L'invention concerne un procédé de réalisation d'une électrode d'une batterie solide comprenant au moins les étapes suivantes : une réalisation d'une électrode (30) sur un support, l'électrode (30) présentant une face supérieure (31) opposée au support, l'électrode (30) présentant au moins une cavité (33) s'étendant en creux depuis sa face supérieure (31), une formation d'une couche ioniquement isolante, dite couche barrière (40), sur la face supérieure (31) de l'électrode (30) et dans l'au moins une cavité (33), puis un retrait de la couche barrière (40) de sorte à mettre à découvert la face supérieure (31) de l'électrode (30), tout en laissant en place la portion de la couche barrière (40) s'étendant dans l'au moins une cavité (33).

## Description

### DOMAINE TECHNIQUE

La présente invention concerne les dispositifs microélectroniques disposant d'électrodes, dans le domaine du stockage d'énergie par voie électrochimique, en particulier sous forme de micro-batterie (réalisant ainsi un composant de microstockage électrochimique). L'invention trouve pour application la fabrication de dispositifs microélectroniques offrant un tel stockage. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Cela inclut des applications du type composants de microstockage par voie électrochimique (microbatteries, microsupercapacités, composant ioniques solides de tout type).

Un intérêt spécifique de l'invention est donc la réalisation de dispositifs de stockage d'énergie électrochimique. Cela inclut notamment les dispositifs du type batteries, et en particulier celles à l'échelle de la micro-électronique, dites micro-batteries, accumulateurs ou condensateurs utilisant un électrolyte, de préférence solide.

### ETAT DE LA TECHNIQUE

Les systèmes de stockage d'énergie électrochimique sont de manière générale réalisés par des dépôts successifs sur un substrat d'un premier collecteur de courant, d'une première électrode, d'un électrolyte ou conducteur ionique, d'une deuxième électrode, et d'un deuxième collecteur de courant. Une encapsulation, par le biais de dépôt de couches supplémentaires, ou par report de capot, est souvent nécessaire pour protéger le système de la réactivité chimique avec l'oxygène et la vapeur d'eau.

La miniaturisation des dispositifs implique de pouvoir produire des sources d'énergie de petite taille, notamment de quelques millimètres carrés, capables de stocker une quantité d'énergie suffisante pour l'application. La capacité d'une micro-batterie est directement proportionnelle au volume des deux électrodes, et notamment de l'électrode positive. La surface active de cette dernière est fortement limitée par la taille finale de la micro-batterie afin qu'elle puisse être intégrée au dispositif final sans encombrement trop pénalisant. Ainsi, une voie utilisable pour accroître la capacité d'une batterie tout en minimisant sa taille est d'augmenter l'épaisseur de l'électrode, et en particulier de l'électrode positive. On cherche typiquement à dépasser une épaisseur de 10 µm.

Cependant, augmenter cette épaisseur entraîne des défauts de surface liés au procédé de dépôt, pouvant entraîner la mise en court-circuit du dispositif de stockage d'énergie. Notamment, les matériaux d'électrodes comme le LiCoO₂ sont habituellement déposés par des procédés de pulvérisation cathodique qui sont contraints à des faibles épaisseurs, généralement inférieures à la dizaine de microns.

Une tentative de solution au problème précédemment évoqué est proposée dans la publication US 2021/0359339 A1 qui propose de réaliser un polissage de la face supérieure de l'électrode. Cependant, cette solution n'est pas satisfaisante car lorsque des défauts de surface s'étendent très profondément dans l'électrode, le polissage doit être effectif sur cette même profondeur. Cela conduit à une très importante réduction de l'épaisseur de l'électrode, ce qui est contre-productif dans un objectif d'augmentation de la capacité de la batterie.

Un objet est donc de proposer un procédé de fabrication d'électrode autorisant des épaisseurs importantes sans que cela soit très préjudiciable, voire pas préjudiciable, aux performances de l'électrode, voire avantageux, surtout d'un point de vue électrique.

Les autres objets, caractéristiques et avantages apparaîtront à l'examen de la description suivante et des dessins d'accompagnement.

### RESUME

Pour atteindre cet objectif, un premier aspect de l'invention concerne un procédé de réalisation d'une électrode d'une batterie solide comprenant au moins les étapes suivantes :
a. une réalisation d'une électrode sur un support, l'électrode présentant une face supérieure opposée au support, l'électrode présentant au moins une cavité s'étendant en creux depuis sa face supérieure, l'au moins une cavité étant de préférence apparue suite à un retrait d'une particule formée lors de la réalisation de l'électrode,
b. une formation d'une couche ioniquement isolante, dite couche barrière, sur la face supérieure de l'électrode et dans l'au moins une cavité,
c. un retrait de la couche barrière de sorte à mettre à découvert la face supérieure de l'électrode, tout en laissant en place la portion de la couche barrière s'étendant dans l'au moins une cavité.

La portion de la couche barrière laissée en place au niveau de l'au moins une cavité sépare ainsi l'électrode et l'électrolyte au niveau de cette cavité. Elle assure ainsi une isolation ionique locale entre ces deux couches. Cela permet de limiter voire d'empêcher les courts-circuits au sein d'un système de stockage comprenant l'électrode formée par le procédé décrit ci-dessus. On constate notamment que cette isolation ionique locale permet d'éviter l'apparition de zones de forte concentration du champ électrique lors du fonctionnement du système de stockage, zones très préjudiciables aux performances du système. La couche barrière permet par la même occasion d'éviter que les matériaux formant l'électrolyte et l'électrode ne se fissurent sous l'effet de ces courant importants.

L'isolation ionique locale entre l'électrode et l'électrolyte n'est par ailleurs effective qu'au niveau des cavités, le courant ionique pouvant ainsi circuler entre ces deux couches au niveau de tout le reste de la face supérieure de l'électrode. On estime ainsi que la surface d'échange entre l'électrode et l'électrolyte perdue du fait de l'isolation ionique représente moins de 5% de la surface totale. Cette proportion est tout à fait acceptable, notamment une fois mise en regard des avantages que l'isolation procure.

Par ailleurs, la solution proposée ne nécessite pas de diminuer l'épaisseur de l'électrode, comme cela est le cas dans les solutions existantes (US 2021/0359339 A1 notamment). Il est possible qu'une faible épaisseur de l'électrode soit retirée lors du retrait partiel de la couche barrière, mais cette épaisseur est très faible relativement à l'épaisseur totale de l'électrode. Il n'est notamment pas nécessaire dans le procédé selon l'invention de retirer l'électrode sur l'épaisseur sur laquelle s'étendent les cavités. L'épaisseur de l'électrode est ainsi très largement voire entièrement préservée, ce qui est bénéfique à la capacité du système de stockage.

Un deuxième aspect de l'invention concerne un procédé de fabrication d'un dispositif de stockage d'énergie par voie électrochimique, comprenant la réalisation d'au moins une électrode en mettant en oeuvre le procédé selon le premier aspect de l'invention.

Un troisième aspect de l'invention concerne un dispositif de stockage d'énergie par voie électrochimique, comprenant en empilement sur un support un collecteur, une électrode et un électrolyte, dans lequel l'électrode comprend au moins une cavité formée en creux depuis une face supérieure de l'électrode et en ce qu'une couche ioniquement isolante, dite couche barrière, remplit au moins partiellement l'au moins une cavité, la couche barrière séparant ainsi localement l'électrode et l'électrolyte.

Les avantages et effets techniques décrits en référence au procédé selon le premier aspect de l'invention s'appliquent mutatis mutandis au procédé et au dispositif selon les deuxième et troisième aspects de l'invention.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures 1A et 1B représentent la croissance d'un défaut lors de la formation d'une électrode.
La figure 1C est une image obtenue par microscopie électronique à balayage (MEB) de défauts apparaissant typiquement lors de la croissance d'une électrode.
La figure 2A illustre la formation d'une cavité dans une électrode suite au décrochage d'un défaut.
La figure 2B illustre la concentration du champ électrique au niveau de la cavité lors du fonctionnement d'un système de stockage d'énergie comprenant l'électrode de la figure 2A.
Les figures 3A à 3F illustrent les différentes étapes d'un exemple de procédé selon la présente invention.
La figure 4A est un agrandissement des figures 3C et 3D sur la face supérieure de l'électrode.
La figure 4B est un agrandissement de la figure 3F sur la face supérieure de l'électrode.
Les figures 5A à 5C illustrent un mode de réalisation alternatif dans lequel les particules présentes dans les cavités à la surface de l'électrode sont retirées.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée des modes de réalisation de l'invention, sont énoncées ci-après des caractéristiques optionnelles qui peuvent éventuellement être utilisées en association ou alternativement :
Selon un mode de réalisation, l'électrode est réalisée par dépôt physique en phase vapeur ou par dépôt électrochimique.

Selon un exemple, on utilise du LiCoO₂ pour réaliser l'électrode.

Selon un mode de réalisation préféré, le procédé comprend en outre, avant l'étape de formation de la couche barrière, une étape de recuit de l'électrode. Cette étape de recuit permet de retirer au moins une partie des particules se trouvant dans les cavités. Un tel recuit permet notamment de retirer avec une bonne efficacité les particules présentant les plus grandes dimensions, qui sont les plus gênantes. Avantageusement, le recuit se fait à une température supérieure ou égale à 300°C, par exemple à une température sensiblement égale à 400°C. Alternativement ou en combinaison avec l'étape de recuit, le retrait des particules peut se faire avec l'usage d'ultra-son et/ou d'une action mécanique. Cette action mécanique peut par exemple être effectuée par abrasion (ou scrubber en anglais) grâce à des jets ou des brosses.

Selon un mode de réalisation préféré, le procédé comprend en outre, avant l'étape de formation de la couche barrière, une étape de polissage de l'électrode à partir de sa face supérieure. Le polissage permet de faire se décrocher les particules se trouvant dans les cavités.

Selon un exemple, l'étape de polissage est configurée pour amincir l'électrode sur une épaisseur supérieure ou égale à 100 nm, de préférence supérieure ou égale à 500 nm, et/ou inférieure ou égale à 2 µm. Par exemple, sur une épaisseur sensiblement égale à 1 µm.

Selon un mode de réalisation préféré, l'étape de retrait de la couche barrière comprend au moins l'une parmi une étape de polissage mécano-chimique et une étape de meulage.

Selon un mode de réalisation préféré, l'étape de retrait de la couche barrière comprend les étapes suivantes :
d. un dépôt d'une couche de résine sur la couche barrière, les portions de la couche de résine surmontant l'au moins une cavité présentant une épaisseur supérieure à celle des portions de la couche de résine ne surmontant pas l'au moins une cavité,
e. une gravure de la couche de résine et de la couche barrière de sorte à mettre à découvert la face supérieure de l'électrode, tout en laissant en place les portions de la couche barrière s'étendant dans l'au moins une cavité.

Selon un exemple, le dépôt de la couche de résine est configuré pour que celle-ci présente une épaisseur inférieure ou égale à 2 micromètres dans ses portions ne surmontant pas l'au moins une cavité.

Selon un exemple, la couche barrière présente une épaisseur supérieure ou égale à 10 nm, de préférence supérieure ou égale à 30 nm.

Selon un exemple du procédé de fabrication d'un dispositif de stockage d'énergie par voie chimique selon l'invention, ce dernier comprend en outre une formation d'un collecteur sur le support puis la réalisation de l'électrode sur le collecteur.

Certaines parties du dispositif de l'invention peuvent avoir une fonction électrique. Certaines sont employées pour des propriétés de conduction ionique et on entend par électrode, collecteur ou équivalent, des éléments formés d'au moins un matériau ayant une conductivité ionique suffisante, dans l'application, pour réaliser la fonction souhaitée. À l'inverse, on entend par isolant ionique ou diélectrique un matériau qui, dans l'application, assure une fonction d'isolation ionique.

On entend par dispositif de stockage d'énergie par voie électrochimique, un dispositif fonctionnant avec une couche d'électrolyte, de préférence sous forme solide et permettant, en conjonction avec une partie fonctionnelle ioniquement conductrice inférieure et une partie fonctionnelle ioniquement conductrice supérieure, encadrant la couche d'électrolyte, le stockage d'énergie sous forme d'augmentation de différence de potentiel ou le déstockage d'énergie sous forme de réduction de différence de potentiel. Dans le domaine de la micro-électronique, il peut s'agir de micro-batteries, qui s'entendent de tels dispositifs avec des dimensions à l'échelle de la microélectronique, notamment avec une épaisseur globale de quelques dizaines de microns, par exemple moins de 100 microns.

D'une façon générale, un dispositif de stockage d'énergie par voie électrochimique comprend deux électrodes séparées par un électrolyte. Durant la décharge, l'anode (électrode négative) est le siège d'une oxydation, des ions traversent l'électrolyte et vont à la cathode (électrode positive) subir une réduction en venant s'intercaler dans un matériau spécifique (matériau hôte) ; les électrons ainsi produits alimentent en énergie le circuit extérieur. Durant la charge, les ions font le trajet inverse, les électrons étant fournis par le circuit extérieur.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B. La sélectivité entre A et B est notée SA:B.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant, soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, une couche, un dispositif, « à base » d'un matériau M, un substrat, une couche, un dispositif comprenant ce matériau M uniquement ou ce matériau M et éventuellement d'autres matériaux, par exemple des éléments d'alliage, des impuretés ou des éléments dopants.

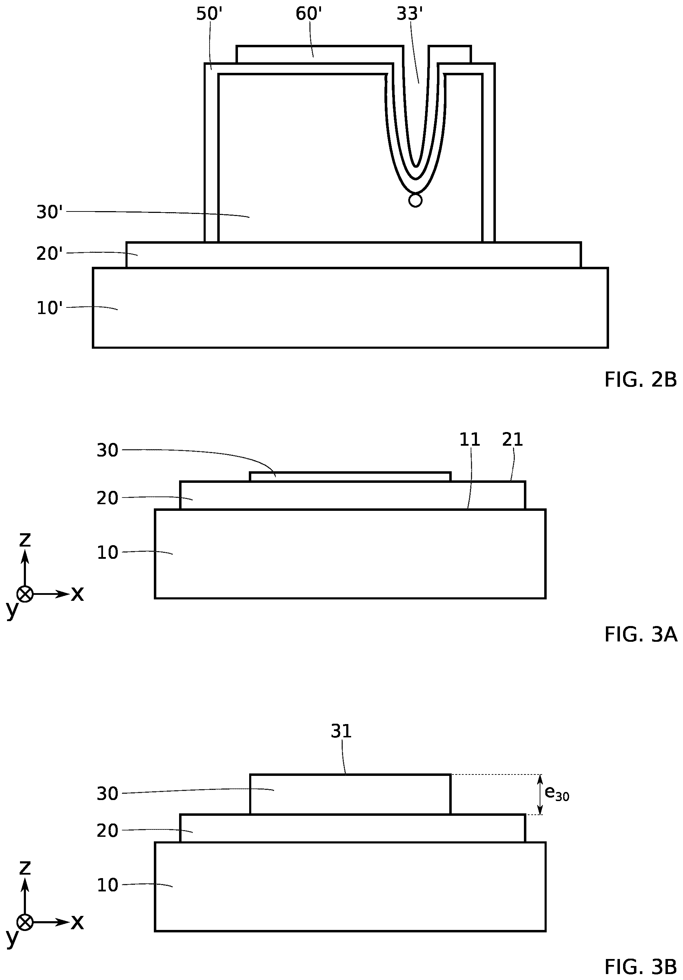

Un repère, de préférence orthonormé, comprenant les axes X, Y, Z est représenté en figure 3A. Ce repère est applicable par extension aux autres figures.

Dans la présente demande de brevet, on parlera préférentiellement d'épaisseur pour une couche et de hauteur pour une structure ou un dispositif. La hauteur est prise perpendiculairement au plan transversal XY. L'épaisseur est prise selon une direction normale au plan d'extension principal de la couche. Ainsi, une couche présente typiquement une épaisseur selon Z, lorsqu'elle s'étend principalement le long du plan transversal XY, et un élément en saillie, par exemple une tranchée, présente une hauteur selon Z. Les termes relatifs « sur », « sous », « sous-jacent » se réfèrent préférentiellement à des positions prises selon la direction Z.

Les termes « sensiblement », « environ », « de l'ordre de » signifient « à 10% près, de préférence à 5% près ».

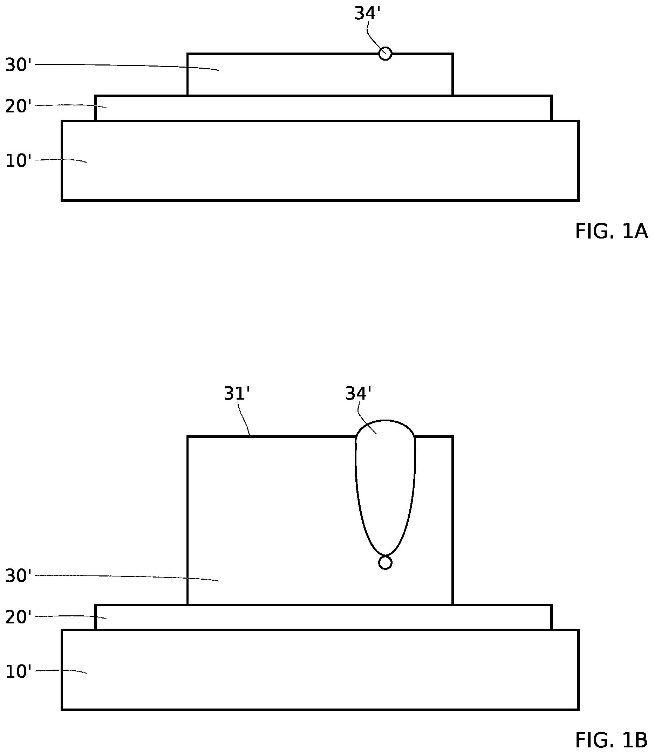

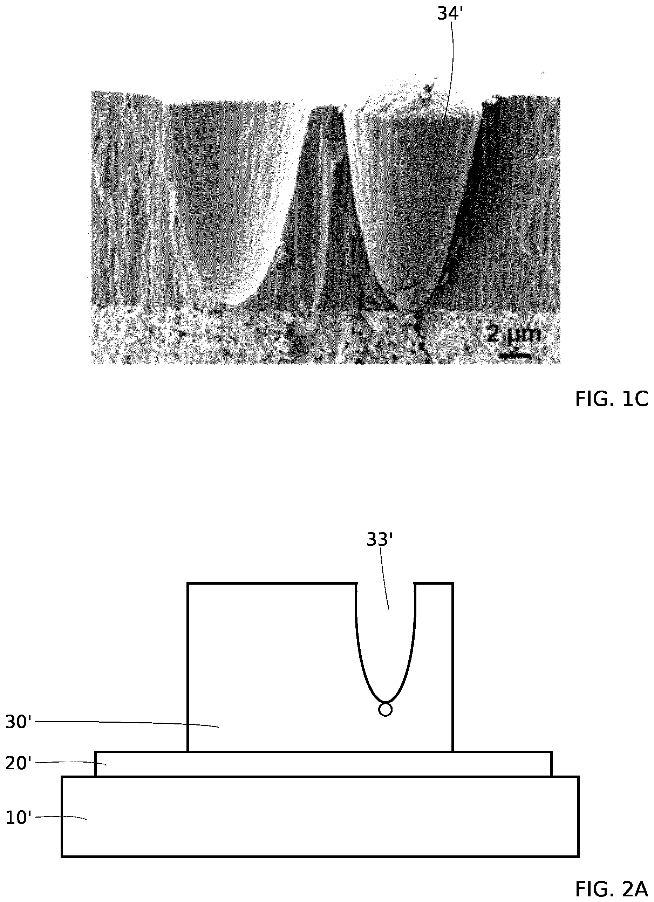

Les figures 1A à 2B illustrent les inconvénients de l'art antérieur. Plus particulièrement, la figure 1A représente le début de la formation d'une électrode 30' sur un empilement formé d'un support 10' et d'un collecteur 20'. Comme illustré, de façon tout à fait classique, au moins un défaut 34' apparaît lors du dépôt de l'électrode 30'. Au cours du dépôt de l'électrode 30', ce défaut 34' croit et finit par s'étendre jusqu'à la face supérieure 31' de l'électrode 30'. Une vue MEB d'un tel défaut 34' est présentée en figure 1C extraite de la publication Influence of Growth Defects on the Corrosion Resistance of Sputter-Deposited TiAlN Hard Coatings, Panjan et al, Coatings 2019. Comme exprimé plus haut, un tel défaut 34' peut entraîner la mise en court-circuit du dispositif de stockage d'énergie. On note notamment que ces défauts peuvent apparaître très tôt dans la croissance de l'électrode et donc s'étendre sur une très grande partie de la hauteur de l'électrode, ce qui est très préjudiciable et favorise les courts-circuits.

Par ailleurs, comme illustré sur la figure 2A, les défauts 34' peuvent être retirés par une intervention extérieure volontaire ou bien se désolidariser d'eux-mêmes, sous l'effet par exemple d'une ou plusieurs étapes de procédé. Cela crée une cavité 33' présentant typiquement un rapport de forme hauteur/largeur très important. Après formation d'un électrolyte 50' et d'une deuxième électrode 60' sur la face supérieure de l'électrode 30' et dans la cavité 33', on constate que le champ électrique se concentre de façon très importante au niveau du bas de la cavité 33'. Cela est très préjudiciable pour le fonctionnement du système de stockage et peut notamment induire des courts-circuits. En particulier, ce phénomène peut induire la formation de dendrites, par exemple de lithium, dans l'électrolyte, ce qui conduit à un court-circuit.

Ce sont ces inconvénients que la présente invention cherche à limiter voire à supprimer.

Différents modes de réalisation du procédé selon l'invention vont maintenant être décrits en référence aux figures 3A à 5C.

Un support 10 est tout d'abord fourni. Ce support 10 présente une face supérieure 11 s'étendant principalement dans un plan parallèle à un plan transversal XY. Le plan transversal XY est défini par une première direction X et une deuxième direction Y. Le support 10 est par exemple formé avec une plaque d'un matériau semi-conducteur tel du silicium ou de tout autre matériau organique ou inorganique, par exemple du verre. Si le support 10 est électriquement conducteur, il peut comprendre au moins une couche électriquement isolante superficielle.

De manière conventionnelle, un collecteur 20 est ensuite formé sur la face supérieure 11 du support 10. Au sens de la présente demande, le terme collecteur s'entend d'une partie du dispositif ayant pour fonction de raccorder une électrode à un élément extérieur au dispositif, c'est-à-dire situé à l'extérieur de l'empilement de couches du dispositif, généralement encapsulées. On peut utiliser des métaux aux bonnes propriétés de conduction d'électricité pour cette partie. C'est le cas du platine ; des matériaux moins onéreux, comme le titane, sont aussi possibles.

Une électrode 30 est formée sur la face supérieure 21 du collecteur, opposée au support 10 (voir figure 3A). L'électrode est par exemple réalisée en LiCoO₂ (dioxyde de cobalt et de lithium). L'électrode 30 est typiquement formée par dépôt physique en phase vapeur (en anglais « physical vapor deposition », PVD) ou par dépôt électrochimique (en anglais « electrochemical deposition », ECD). Le passage de la figure 3A à la figure 3B illustre la formation progressive de l'électrode par l'une de ces méthodes. Les différentes méthodes de dépôt envisageables conduisent toutes à une rugosité de surface importante de l'électrode 30.

L'électrode 30 présente une face supérieure 31 opposée au support 10 et au collecteur 20. Celle-ci s'étend typiquement dans un plan parallèle au plan transversal XY.

Il est entendu que la figure 3B notamment est une représentation schématique, ne figurant notamment pas les défauts présents au niveau de la face supérieure de l'électrode 30.

L'électrode 30 présente une épaisseur e₃₀ mesurée perpendiculairement à sa face supérieure 31 et donc typiquement selon la direction Z. L'épaisseur e₃₀ de l'électrode est typiquement supérieure à 10 µm, de préférence supérieure à 20 µm. Elle peut notamment être comprise entre 20 et 200 µm.

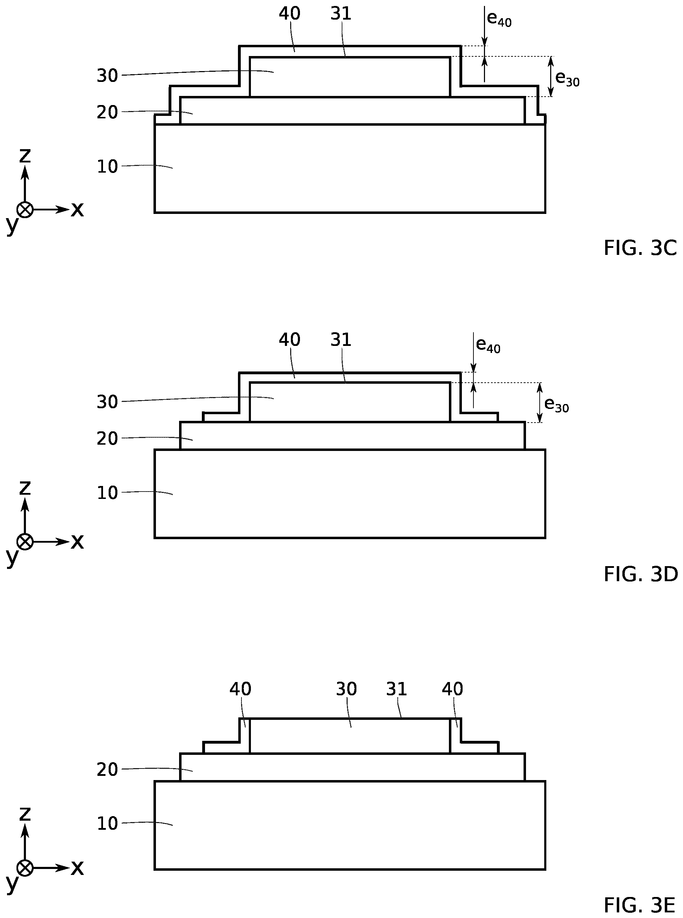

Comme illustré à la figure 3C, une couche à base d'un matériau ioniquement isolant est formée sur la face supérieure 31 de l'électrode 30. Cette couche peut notamment être désignée couche barrière 40. Elle peut par exemple être à base d'au moins l'un parmi les matériaux suivants : Al₂O₃, TiO₂, TiN, Ti, AI, Pt, SiN, SiON, TaN, Ta.

Typiquement, la couche barrière 40 est déposée de façon conforme sur l'empilement. Ainsi, dans un premier temps, la couche barrière 40 est typiquement déposée sur la face supérieure 21 du collecteur 20 et la face supérieure 11 du support 10 du fait du retrait de l'électrode 30 relativement au collecteur 20 et du collecteur 20 relativement au support 10. Il est alors possible, comme illustré à la figure 3D, de retirer une partie de la couche barrière 40, par exemple la portion s'étendant contre la face supérieure 11 du support 10. Avantageusement, ce retrait permet de mettre à jour une portion au moins de la face supérieure 21 du collecteur 20.

La couche barrière 40 présente une épaisseur e₄₀ mesurée perpendiculairement à la face supérieure 31 de l'électrode 30 et donc typiquement selon la direction Z. L'épaisseur e₄₀ de la couche barrière 40 est typiquement supérieure à 10 nm, par exemple sensiblement égale à 50 nm.

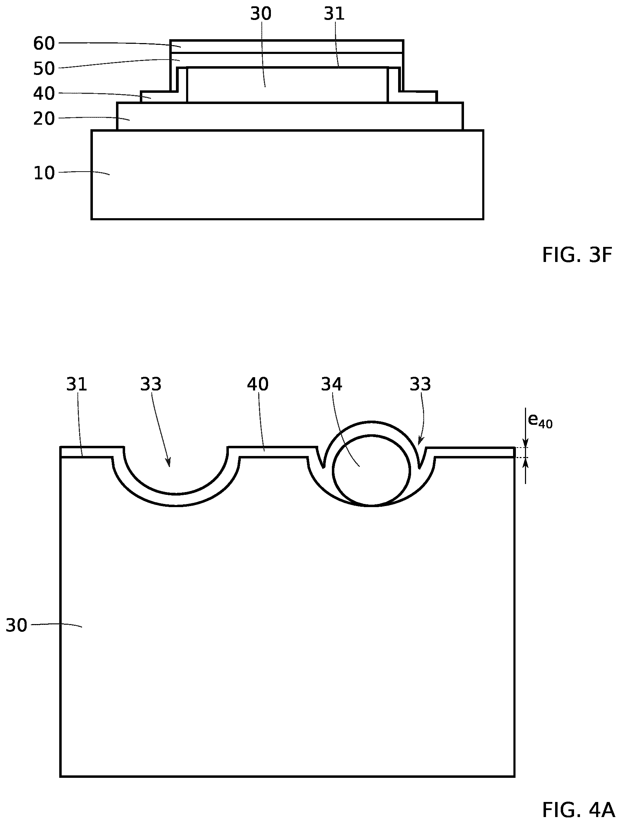

La figure 4A est un agrandissement des figures 3C et 3D au niveau de la face supérieure 31 de l'électrode 30. Elle illustre les défauts présents à la surface de l'électrode 30. Comme illustré, des cavités 33 s'étendent depuis la face supérieure 31 de l'électrode 30. Ces cavités 33 définissent des creux dans l'électrode 30. Les cavités 33 apparaissent par retrait ou détachement de particules 34 typiquement présentes au niveau de la face supérieure 31 de l'électrode 30. Dans certaines cavités 33, on peut trouver des défauts supplémentaires sous forme de particules 34 non détachées. Les particules 34 apparaissent typiquement lors de la croissance de l'électrode 30, par exemple lors de la croissance de LiCoO₂.

Comme illustré, le dépôt de la couche barrière 40 est configuré pour que celle-ci s'étende dans les cavités 33. La couche barrière 40 recouvre par ailleurs les particules 34 lorsque celles-ci sont présentes dans les cavités 33. On privilégie un dépôt de la couche barrière par dépôt de couches atomiques (en anglais « atomic layer deposition », ALD), qui permet un dépôt conforme jusqu'au fond des cavités 33, même lorsque celles-ci présentent un rapport de forme hauteur/largeur élevé.

La couche barrière 40 est ensuite partiellement retirée, de manière à mettre à jour partiellement, et de préférence entièrement, les zones de la face supérieure 31 de l'électrode 30 exemptes de cavités 33. Lors de ce retrait, on garde en place une portion de la couche barrière 40 s'étendant dans la ou les cavités 33. Ainsi, la portion de la couche barrière 40 maintenue en place lors de cette étape de retrait partiel, dite portion barrière restante 40*, peut être continue (dans le cas d'une unique cavité présente à la surface de l'électrode 30) ou discontinue (dans le cas de plusieurs cavités). Dans ce dernier cas, la portion barrière restante 40* est formée d'une pluralité de portions s'étendant chacune dans une cavité 33. Avantageusement, la portion barrière restante 40* couvre entièrement chaque cavité 33.

Le retrait partiel de la couche barrière 40 peut être réalisé de différentes manières.

Selon un exemple, ce retrait est effectué par polissage, par exemple par polissage mécano-chimique (CMP) ou par meulage (couramment désigné par le terme anglais « grinding »). Le polissage peut être effectif sur une épaisseur supérieure à l'épaisseur de la couche barrière 40 et continuer dans l'électrode. Le polissage peut par exemple être effectué sur une épaisseur de 100 nm. On note cependant qu'il est suffisant que le polissage permette de mettre à jour la face supérieure 31 de l'électrode 30.

Selon un autre exemple, le retrait de la couche barrière 40 est effectué en déposant de façon non conforme une couche de résine sur la couche barrière 40 puis en réalisant une gravure de la couche barrière 40 au travers de cette couche de résine. La couche de résine est ainsi déposée de sorte qu'elle présente une première épaisseur au niveau de ses portions ne surmontant pas de cavités 33 et une deuxième épaisseur distincte de la première épaisseur au niveau de ses portions surmontant les cavités 33. Le dépôt de la couche de résine est configuré pour que la deuxième épaisseur soit supérieure à la première épaisseur, par exemple au moins deux fois supérieure à la première épaisseur. Par exemple, la première épaisseur peut être inférieure ou égale à 2 µm et la deuxième épaisseur supérieure ou égale à 4 µm. On réalise ensuite une étape de gravure configurée pour s'arrêter lorsque la première épaisseur est entièrement retirée et que la face supérieure 31 de l'électrode 30 est mise à jour. La deuxième épaisseur étant supérieure à la première épaisseur, les zones de la couche barrière 40 se trouvant dans les cavités 33 ne sont pas entamées par la gravure. L'arrêt de cette gravure peut être un simple arrêt au temps, ou bien la gravure peut être une gravure sélective vis-à-vis du matériau de l'électrode.

Il est envisageable de combiner ces différentes techniques de retrait.

On obtient ainsi l'empilement illustré à la figure 3E.

Comme illustré à la figure 3F, de façon classique, un électrolyte 50 et une deuxième électrode 60 sont ensuite formées au-dessus de l'électrode 30. L'électrolyte 50 peut par exemple être réalisée en un phosphate de lithium nitruré amorphe (LiPON). La deuxième électrode 60 peut par exemple être réalisée en titane. La deuxième électrode 60 forme ici l'anode, la cathode étant formée par l'électrode 30.

La portion barrière restante 40* sépare ainsi l'électrode 30 et l'électrolyte 50 au niveau de chaque cavité 33. Elle assure ainsi une isolation ionique locale entre ces deux couches. Cela permet de limiter voire d'empêcher les courts-circuits au sein du système de stockage.

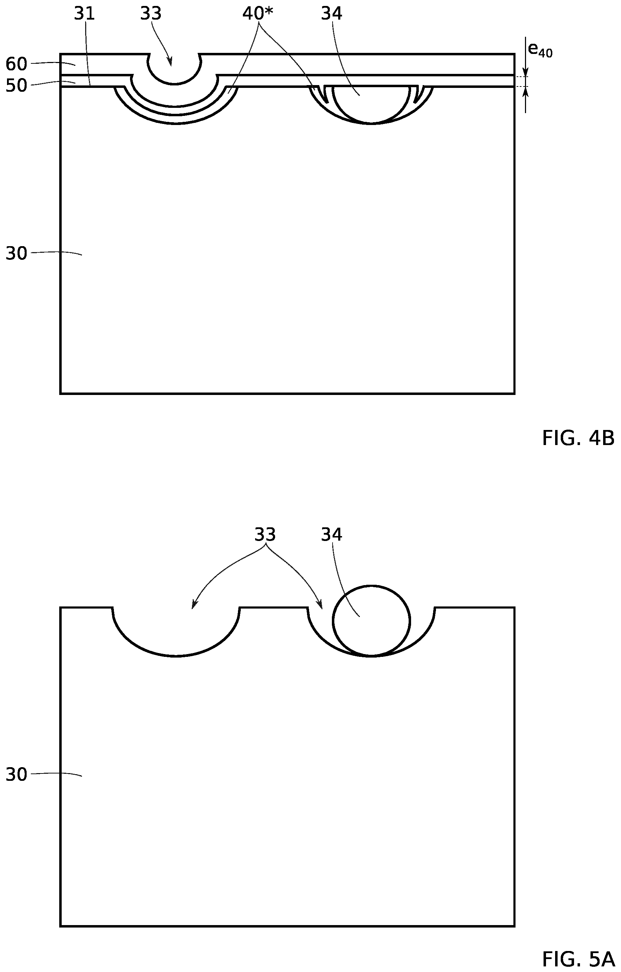

Les figures 5A à 5C illustrent un mode de réalisation avantageux du procédé selon l'invention. Dans cet exemple, on procède au retrait des particules 34 se trouvant dans les cavités 33 avant de forme la couche barrière 40.

Il a en effet été remarqué que, lors du retrait partiel de la couche barrière 40, les particules 34 présentes dans les cavités 33 se décrochaient parfois. La couche barrière 40 ayant été déposée sur ces particules 34, le décrochage de ces particules provoque l'absence locale de couche barrière au fond des cavités 33. L'isolation n'est donc localement plus assurée dans les cavités 33 dans lesquelles une particule 34 était présente, puis s'est décrochée. Pour prévenir cela, on prévoit avantageusement, avant l'étape de dépôt de la couche barrière 40, une étape de retrait d'au moins une partie des particules 34.

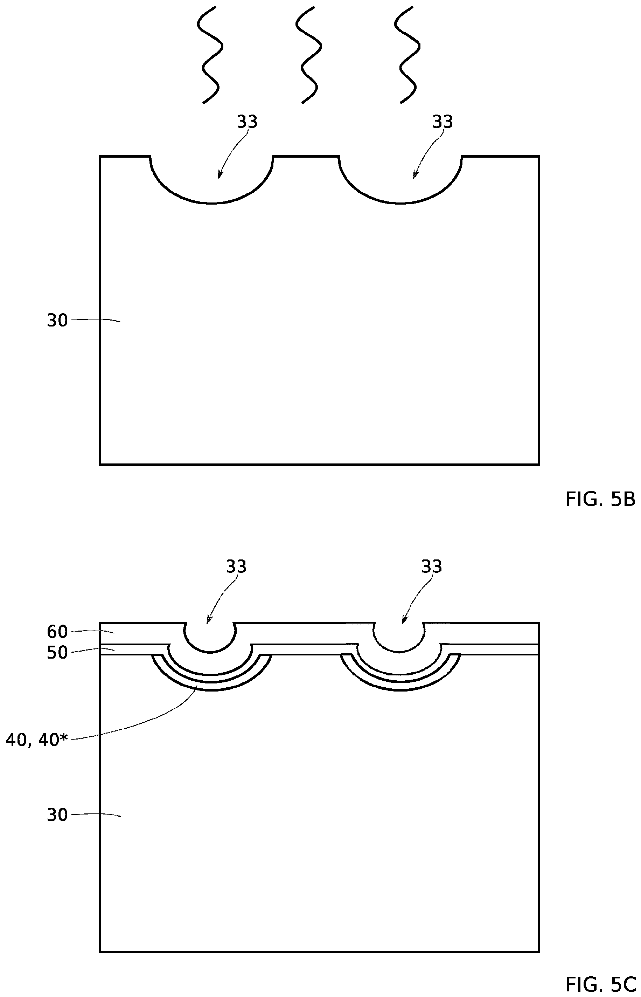

Pour ce faire, il est par exemple possible de réaliser un recuit de l'électrode (figure 5B). Ce recuit génère des contraintes dans les particules 34 et l'électrode 30 finissant par provoquer le détachement des particules 34. Cette méthode fonctionnera particulièrement bien dans le cas d'une électrode formée dans un matériau à fort coefficient de dilatation thermique, comme cela est notamment le cas du LiCoO₂.

Il est également possible de mettre en œuvre une étape de polissage, qui a également pour effet de faire se détacher les particules 34. Ce polissage peut par exemple être effectué sur une épaisseur inférieure ou égale à 1 µm.

Recuit et polissage peuvent bien entendu être combinés pour détacher le plus de particules 34 possible.

On note qu'une étape de recuit peut suffire à retirer les particules 34 les plus gênantes pour le fonctionnement du système de stockage, c'est-à-dire celles présentant les dimensions les plus importantes. De manière générale, on estime qu'une particule 34 présentant une hauteur inférieure ou égale à 50% de la hauteur de l'électrode 30 n'est pas gênante.

Un autre objet de l'invention concerne un dispositif de stockage d'énergie par voie électrochimique. Ce dispositif est illustré à la figure 3F. Il comprend, en empilement : le support 10, le collecteur 20, l'électrode 30 et l'électrolyte 50. Comme décrit précédemment, l'électrode 30 présente au moins une cavité 33 s'étendant depuis sa face supérieure 31. Par ailleurs, le dispositif selon l'invention comprend la portion barrière restante de la couche barrière telle que décrite précédemment, et qui sépare ainsi, au niveau des cavités 33, l'électrode 30 et l'électrolyte 50. Ce dispositif de stockage peut être obtenu en ayant mis en œuvre l'un quelconque des modes de réalisation du procédé décrits précédemment. Notamment, les particules 34 présentes au niveau des cavités 33 peuvent ou non avoir été retirées lors de la fabrication du dispositif. Le dispositif final pourra donc ou non présenter des résidus de particules 34 voire des particules entières au sein des cavités 33 (agrandissements des figures 4B ou 5C).

Au vu des différents modes de réalisation décrits précédemment, il apparaît que la présente invention propose une solution efficace pour améliorer les performances d'une électrode, notamment au sein d'un dispositif de stockage d'énergie électrochimique. Notamment, l'invention limite les problèmes de courts-circuits et de fissures dans l'électrolyte et dans les systèmes de stockage en général, et permet que l'électrode présente une épaisseur importante (plusieurs dizaines voire centaines de micromètres). Cela se traduit par une amélioration de la capacité de stockage du système et donc un système plus performant.

L'invention n'est pas limitée aux modes de réalisations précédemment décrits et s'étend à tous les modes de réalisation couverts par l'invention.

## Revendications

1. Procédé de réalisation d'une électrode d'une batterie solide comprenant au moins les étapes suivantes :
• une réalisation d'une électrode (30) sur un support (10), l'électrode (30) présentant une face supérieure (31) opposée au support (10), l'électrode (30) présentant au moins une cavité (33) s'étendant en creux depuis sa face supérieure (31), l'au moins une cavité (33) étant apparue suite à un retrait d'une particule (34) formée lors de la réalisation de l'électrode (30),
• une formation d'une couche ioniquement isolante, dite couche barrière (40), sur la face supérieure (31) de l'électrode (30) et dans l'au moins une cavité (33),
• un retrait de la couche barrière (40) de sorte à mettre à découvert la face supérieure (31) de l'électrode (30), tout en laissant en place la portion de la couche barrière (40) s'étendant dans l'au moins une cavité (33).

2. Procédé selon la revendication précédente, dans lequel l'électrode (30) est réalisée par dépôt physique en phase vapeur ou par dépôt électrochimique.

3. Procédé selon l'une quelconque des revendications précédentes, dans lequel on utilise du LiCoO₂ pour réaliser l'électrode (30).

4. Procédé selon l'une quelconque des revendications précédentes, comprenant en outre, avant l'étape de formation de la couche barrière (40), une étape de recuit de l'électrode (30).

5. Procédé selon l'une quelconque des revendications précédentes, comprenant en outre, avant l'étape de formation de la couche barrière (40), une étape de polissage de l'électrode (30) à partir de sa face supérieure (31).

6. Procédé selon la revendication précédente, dans lequel l'étape de polissage est configurée pour amincir l'électrode (30) sur une épaisseur supérieure ou égale à 100 nm et/ou inférieure ou égale à 2 µm.

7. Procédé selon l'une quelconque des revendications précédentes, dans lequel l'étape de retrait de la couche barrière (40) comprend au moins l'une parmi une étape de polissage mécano-chimique et une étape de meulage.

8. Procédé selon l'une quelconque des revendications 1 à 6, dans lequel l'étape de retrait de la couche barrière (40) comprend les étapes suivantes :
• un dépôt d'une couche de résine sur la couche barrière (40), les portions de la couche de résine surmontant l'au moins une cavité (33) présentant une épaisseur supérieure à celle des portions de la couche de résine ne surmontant pas l'au moins une cavité (33),
• une gravure de la couche de résine et de la couche barrière (40) de sorte à mettre à découvert la face supérieure (31) de l'électrode (30), tout en laissant en place les portions de la couche barrière (40) s'étendant dans l'au moins une cavité (33).

9. Procédé selon la revendication précédente, dans lequel le dépôt de la couche de résine est configuré pour que celle-ci présente une épaisseur inférieure ou égale à 2 micromètres dans ses portions ne surmontant pas l'au moins une cavité (33).

10. Procédé selon l'une quelconque des revendications précédentes, dans lequel la couche barrière (40) présente une épaisseur supérieure ou égale à 10 nm, de préférence supérieure ou égale à 30 nm.

11. Procédé de fabrication d'un dispositif de stockage d'énergie par voie électrochimique, comprenant la réalisation d'au moins une électrode (30) en mettant en œuvre le procédé selon l'une des revendications précédentes.

12. Procédé selon la revendication précédente, comprenant une formation d'un collecteur (20) sur le support (10) puis la réalisation de l'électrode (30) sur le collecteur (20).

13. Dispositif de stockage d'énergie par voie électrochimique, comprenant en empilement sur un support (10) un collecteur (20), une électrode (30) et un électrolyte (50), **caractérisé en ce que** l'électrode (30) comprend au moins une cavité (33) formée en creux depuis une face supérieure (31) de l'électrode (30) et **en ce qu'**une couche ioniquement isolante, dite couche barrière (40), remplit au moins partiellement l'au moins une cavité (33), la couche barrière (40) séparant ainsi localement l'électrode (30) et l'électrolyte (50).
